# EUROPÄISCHE PATENTSCHRIFT

(11) **EP 1 667 893 B1**
(45) Veröffentlichungstag und Bekanntmachung des Hinweises auf die Patenterteilung: **12.11.2008**
(21) Anmeldenummer: 04787215.5
(22) Anmeldetag: 27.09.2004
(51) Int. Cl.: B62D 5/065, B62D 5/06

(54) **BETRIEBSVERFAHREN FÜR EIN HILFSKRAFTVERSTÄRKTES HYDRO-LENKSYSTEM EINES KRAFTFAHRZEUGS**
METHOD FOR OPERATING A POWER-ASSISTED HYDRAULIC STEERING SYSTEM IN A MOTOR VEHICLE
PROCEDE POUR FAIRE FONCTIONNER UN SYSTEME DE DIRECTION HYDRAULIQUE ASSISTE D'UN VEHICULE AUTOMOBILE

(30) Priorität: 30.09.2003 DE 10345293
(43) Veröffentlichungstag der Anmeldung: 14.06.2006
(73) Patentinhaber: Bayerische Motoren Werke Aktiengesellschaft, 80809 München (DE)
(72) Erfinder: REUTER, Robert, 81247 München (DE); KOLBECK, Klaus, 82319 Starnberg (DE); SCHOTT, Stefan, 85737 Ismaning (DE)
(86) Internationale Anmeldenummer: PCT/EP2004/052315
(87) Internationale Veröffentlichungsnummer: WO 2005/032914

(56) Entgegenhaltungen:
- EP-A- 0 962 377
- EP-A- 1 331 156
- DE-A- 4 230 957
- DE-A- 10 211 396

## Beschreibung

Die Erfindung betrifft ein Betriebsverfahren für ein hilfskraftverstärktes Hydro-Lenksystem eines Kraftfahrzeugs mit einer vom Fahrzeug-Antriebsaggregat mechanisch angetriebenen Hydraulikpumpe sowie mit einer Zusatzfunktion, die das Ausmaß der Hilfskraft-Unterstützung bei hoher Fahrgeschwindigkeit gegenüber der Unterstützung bei niedriger Fahrgeschwindigkeit verringert und dabei gleichzeitig die Menge des über die hydraulische Unterstützungseinheit des Lenkgetriebes umgewälzten Hydraulikmediums erhöht, wobei diese Zusatzfunktion unabhängig von der Fahrgeschwindigkeit auch bei Betriebszuständen aktiviert wird, die zu einer extremen Belastung der Hydraulikpumpe führen können. Zum technischen Umfeld wird neben der EP 0 962 377 A2 und der System-Beschreibung der dem Fachmann bekannten Servotronic^{®} der ZF Lenksysteme insbesondere auf die EP 1 331 156 A2 verwiesen.

Hydro-Lenksysteme mit Merkmalen aus dem Oberbegriff des Anspruchs 1 werden von verschiedenen Lenksystemherstellern angeboten und zeichnen sich dadurch aus, dass als sog. Zusatzfunktion die sog. Handlenkmoment-Druck-Ventilkennlinie eines Lenkhilfe-Ventils in Abhängigkeit von der Fahrgeschwindigkeit des Kraftfahrzeugs veränderbar ist bzw. verändert wird. Eine derartige geschwindigkeitsabhängige hydraulische Lenkung ermöglicht dem Fahrer des Fahrzeugs im Stand und bei geringer Fahrgeschwindigkeit (bspw. beim Parkieren) ein komfortables Durchlenken aufgrund eines hohen Unterstützungsmomentes und bietet bei höheren Fahrgeschwindigkeiten eine gute Rückmeldung aufgrund eines reduzierten bzw. geringen Unterstützungsmomentes.

Bei bekannten Hydro-Lenksystemen mit Merkmalen aus dem Oberbegriff des Anspruchs 1 kann bei gewissen Betriebszuständen der Druck im Hydrauliksystem erheblich ansteigen, wenn lediglich eine geringe Hydraulikmenge über die sog. hydraulische Unterstützungseinheit des Lenkgetriebes - üblicherweise handelt es sich hierbei um eine Kolben-Zylinder-Einheit, die bspw. mit einer Zahnstange des mechanischen Zahnstangen-Lenkgetriebes in Reihe geschaltet ist - geführt wird. Die Hydraulikpumpe des Hydro-Lenksystems wird dabei mit unveränderter bzw. von der Drehzahl des diese Pumpe antreibenden Fzg.-Antriebsaggregates abhängiger Förderleistung betrieben, so dass quasi überschüssige Pumpen-Förderleistung größtenteils innerhalb der Pumpe in Wärmeenergie umgesetzt wird, wodurch die Pumpe extrem belastet wird bzw. in Extremfällen geschädigt werden kann.

In der eingangs letztgenannten EP 1 331 156 A2 ist ein hilfskraftverstärktes Hydro-Lenksystem beschrieben, bei dem das Ausmaß der Hilfskraft-Unterstützung ebenfalls mit zunehmender Fahrgeschwindigkeit verringert wird, und wobei weiterhin ein sog. "Strom-Einstell-Wert". (current instruction value) unter anderem vom Lenkwinkel sowie von der Lenkwinkel-Änderungsgeschwindigkeit abhängig gemacht wird. Weiterhin kann dieser Wert von der Drehzahl einer Maschine und von der Hubzahl einer Pumpe abhängig gemacht werden. Auch damit kann jedoch die im vorhergehenden Absatz beschriebene Problematik nicht behoben werden.

Weiteren bekannten Stand der Technik bildet neben der EP 0 962 377 A, aus der es bekannt ist, bei einem Hydro-Lenksystem mit elektromotorisch angetriebener Hydraulikpumpe deren Förderleistung bei Annäherung an den Lenkungs-Endanschlag durch Reduzierung der Drehzahl des Elektromotors herabzusetzen, bspw. die DE 102 11 396 A1, gemäß der eine energetisch vorteilhafte Funktionsweise einer Hilfskraftlenkung darin besteht, dass die Hydraulikpumpe des Lenksystems von ihrem Antrieb abkoppelbar ist und in bestimmten Fahrsituationen abgekoppelt wird. Schließlich ist in der

DE 42 30 957 A1 noch vorgeschlagen, einen die Hydraulikpumpe ansteuernden Elektromotor im Hinblick auf eine angepasste Fördermenge des Hydraulikmediums geeignet anzusteuern.

Hinsichtlich der weiter oben genannten Problematik, nämlich der Umsetzung quasi überschüssiger Pumpen-Förderleistung größtenteils innerhalb der Pumpe in Wärmeenergie besteht dennoch Bedarf nach ein einer einfachen Lösung, die aufzuzeigen sich die vorliegende Erfindung zur Aufgabe gestellt hat.

Die Lösung dieser Aufgabe ist für ein hilfskraftverstärktes Hydro-Lenksystem eines Kraftfahrzeugs mit einer vom Fahrzeug-Antriebsaggregat mechanisch angetriebenen Hydraulikpumpe sowie mit einer Zusatzfunktion, die das Ausmaß der Hilfskraft-Unterstützung bei hoher Fahrgeschwindigkeit gegenüber der Unterstützung bei niedriger Fahrgeschwindigkeit verringert und dabei gleichzeitig die Menge des über die hydraulische Unterstützungseinheit des Lenkgetriebes umgewälzten Hydraulikmediums erhöht, wobei diese Zusatzfunktion unabhängig von der Fahrgeschwindigkeit auch bei Betriebszuständen aktiviert wird, die zu einer extremen Belastung der Hydraulikpumpe führen können, dadurch gekennzeichnet, dass die besagte Zusatzfunktion bei Vorliegen zumindest einer der folgenden Randbedingungen aktiviert wird:
• über eine gewisse Zeitspanne betrachtet sind Lenkwinkel, die größer als ein bestimmter Grenz-Lenkwinkel sind, eingestellt
• die Temperatur des Hydraulikmediums überschreitet eine bestimmte Grenz-Temperatur
• der Hydraulikdruck auf der Förderseite der Hydraulikpumpe überschreitet einen bestimmten Grenz-Druck
• über eine gewisse Zeitspanne betrachtet überschreitet der Hydraulikdruck auf der Förderseite der Hydraulikpumpe einen bestimmten Grenz-Druck
• über eine gewisse Zeitspanne betrachtet überschreiten die Temperatur des Hydraulikmediums eine bestimmte Grenz-Temperatur und der Hydraulikdruck auf der Förderseite der Hydraulikpumpe einen bestimmten Grenz-Druck.

Es wird somit in für die Hydraulikpumpe "kritischen" Betriebszuständen auch bei geringeren bzw. sehr geringen Fahrgeschwindigkeiten die besagte Zusatzfunktion, die ansonsten nur bei höheren oder hohen Fahrgeschwindigkeiten aktiv ist, aktiviert. Da die aktive Zusatzfunktion bei den bekannten Lenksystemen eine größere Menge von Hydraulikmedium über das Lenkgetriebe bzw. die diesem zugeordnete hydraulische Unterstützungseinheit umwälzt, wird die in der Hydraulikpumpe entstehende Wärmeenergie verbessert abgeführt und somit die Pumpe vor Überhitzung geschützt.

Dabei sei darauf hingewiesen, dass diese besagte Zusatzfunktion vorzugsweise nicht als Sprungfunktion ausgebildet ist, sondern eine praktisch stufenlose Veränderung des Ausmaßes der Hilfskraft-Unterstützung und/oder insbesondere der Menge von über die hydraulische Unterstützungseinheit umgewälztem Hydraulikmedium ermöglichen kann. Es kann also bei Gefahr einer Pumpenschädigung, d.h. in Betriebszuständen, die zu einer extremen Belastung der Hydraulikpumpe führen, die Menge des über die hydraulische Unterstützungseinheit umgewälzten Hydraulikmediums quasi gezielt so eingestellt werden, dass die in der Hydraulikpumpe anfallende Wärme in ausreichendem Maße abgeführt wird. Dabei sind durchaus Einstellungen möglich, bei denen dieser genannte Effekt erzielt wird, ohne dass der Fahrer auf eine für ihn ausreichende Hilfskraft-Unterstützung verzichten muss.

Es wird also die besagte Zusatzfunktion, nämlich die Umschaltung auf die Handlenkmoment-Druck-Ventilkennlinie für höhere oder hohe Fahrgeschwindigkeiten auch bei niedrigen Fahrgeschwindigkeiten und besonderen kritischen messbaren Zuständen aktiviert. Ein derartiger Zustand kann dadurch gekennzeichnet sein, dass über eine gewisse Zeitspanne Lenkwinkel, die größer als ein bestimmter Grenz-Lenkwinkel sind, eingestellt sind. Hierbei wird also der Lenkwinkel bestimmt und zusätzlich geht die entsprechende Belastungsdauer des Hydro-Lenksystems mit ein. Die jeweiligen Grenzwerte, also der Grenz-Lenkwinkel und die zughörige gewisse Zeitspanne können bspw. in einer einfachen Versuchsreihe festgelegt werden und in einer elektronischen Steuereinheit des Kraftfahrzeugs abgelegt sein.

Es ist auch möglich bzw. vorteilhaft, die besagte Zusatzfunktion zu aktivieren, wenn die Temperatur des Hydraulikmediums eine bestimmte Grenz-Temperatur überschreitet und/oder wenn der Hydraulikdruck insbesondere auf der Förderseite der Hydraulikpumpe einen bestimmten Grenz-Druck überschreitet. Entsprechende Messungen sind mittels geeigneter Sensoren einfach möglich. Hierbei kann ebenfalls eine Zeitabhängigkeit umgesetzt sein, derart, dass die besagte Zusatzfunktion aktiviert wird, wenn über eine gewisse Zeitspanne der Hydraulikdruck auf der Förderseite der Hydraulikpumpe einen bestimmten Grenz-Druck überschreitet. Ebenso kann die besagte Zusatzfunktion aktiviert, d.h. auch bei niedrigeren Fahrgeschwindigkeiten auf die Handlenkmoment-Druck-Ventilkennlinie für hohe Fahrgeschwindigkeiten umgeschaltet werden, wenn über eine gewisse Zeitspanne die Temperatur des Hydraulikmediums eine bestimmte Grenz-Temperatur überschreitet und der Hydraulikdruck auf der Förderseite der Hydraulikpumpe einen bestimmten Grenz-Druck überschreitet.

Mit dem vorgeschlagenen Betriebsverfahren kann eine Überhitzung der Hydraulikpumpe sowie ein hierdurch möglicherweise hervorgerufener Ausfall der Lenkunterstützung vermieden werden. Die Lebensdauer der Hydraulikpumpe wird erhöht. Dabei kann das vorgeschlagene Betriebsverfahren einfach und ohne großen zusätzlichen Aufwand implementiert werden.

## Patentansprüche

1. Betriebsverfahren für ein hilfskraftverstärktes Hydro-Lenksystem eines Kraftfahrzeugs mit einer vom Fahrzeug-Antriebsaggregat mechanisch angetriebenen Hydraulikpumpe sowie mit einer Zusatzfunktion, die das Ausmaß der Hilfskraft-Unterstützung bei hoher Fahrgeschwindigkeit gegenüber der Unterstützung bei niedriger Fahrgeschwindigkeit verringert und dabei gleichzeitig die Menge des über die hydraulische Unterstützungseinheit des Lenkgetriebes umgewälzten Hydraulikmediums erhöht, wobei diese Zusatzfunktion unabhängig von der Fahrgeschwindigkeit auch bei Betriebszuständen aktiviert wird, die zu einer extremen Belastung der Hydraulikpumpe führen können,
**dadurch gekennzeichnet, dass** die besagte Zusatzfunktion bei Vorliegen zumindest einer der folgenden Randbedingungen aktiviert wird:
• über eine gewisse Zeitspanne betrachtet sind Lenkwinkel, die größer als ein bestimmter Grenz-Lenkwinkel sind, eingestellt
• die Temperatur des Hydraulikmediums überschreitet eine bestimmte Grenz-Temperatur
• der Hydraulikdruck auf der Förderseite der Hydraulikpumpe überschreitet einen bestimmten Grenz-Druck
• über eine gewisse Zeitspanne betrachtet überschreitet der Hydraulikdruck auf der Förderseite der Hydraulikpumpe einen bestimmten Grenz-Druck
• über eine gewisse Zeitspanne betrachtet überschreiten die Temperatur des Hydraulikmediums eine bestimmte Grenz-Temperatur und der Hydraulikdruck auf der Förderseite der Hydraulikpumpe einen bestimmten Grenz-Druck.

## Claims

1. An operating method for a power-assisted hydraulic steering system of a motor vehicle with a hydraulic pump, which is mechanically driven by the vehicle's drive unit, and with an additional function which reduces the amount of power assistance at a high travelling speed compared to the assistance at a low travelling speed and, in the process, simultaneously increases the amount of hydraulic medium circulated by means of the hydraulic assistance unit of the steering gear, the additional function being activated independently of the travelling speed even during operating states which can lead to extreme strain on the hydraulic pump, **characterised in that** said additional function is activated when at least one of the following boundary conditions are present:
• observed over a specific timespan, steering angles greater than a specific limit steering angle are adjusted
• the temperature of the hydraulic medium exceeds a specific limit temperature
• the hydraulic pressure on the delivery side of the hydraulic pump exceeds a specific limit pressure
• observed over a specific timespan, the hydraulic pressure on the delivery side of the hydraulic pump exceeds a specific limit pressure
• observed over a specific timespan, the temperature of the hydraulic medium exceeds a specific limit temperature and the hydraulic pressure on the delivery side of the hydraulic pump exceeds a specific limit pressure.

## Revendications

1. Procédé de commande d'un système de direction hydraulique assisté d'un véhicule automobile comportant une pompe hydraulique entraînée mécaniquement par le groupe d'entraînement du véhicule ainsi qu'avec une fonction auxiliaire qui diminue le degré d'assistance par la force auxiliaire à vitesse de déplacement élevée par rapport à l'assistance à vitesse de déplacement faible et qui augmente en même temps la quantité du liquide hydraulique mise en circulation par l'unité d'assistance hydraulique de la transmission de direction,
cette fonction auxiliaire étant activée indépendamment de la vitesse de déplacement même pour des états de fonctionnement qui peuvent aboutir à une sollicitation extrême de la pompe hydraulique,
**caractérisé en ce que**
cette fonction auxiliaire est activée pour au moins l'une des conditions limites suivantes :
• sur une certaine période l'angle de direction supérieur à un angle de direction limite déterminé,
• la température du liquide hydraulique dépasse une température limite déterminée,
• la pression hydraulique appliquée sur le côté refoulement de la pompe hydraulique dépasse une certaine pression limite,
• sur une certaine période, la pression hydraulique côté refoulement de la pompe hydraulique dépasse une certaine pression limite,
• sur une certaine période, la température du liquide hydraulique dépasse une certaine température limite et la pression hydraulique côté refoulement de la pompe hydraulique dépasse une certaine pression limite.
